Europäisches Patentamt

European Patent Office

Office européen des brevets

(19)

(11) Numéro de publication: **0 267 116**
**B1**

(12) **FASCICULE DE BREVET EUROPEEN**

(51) Int. Cl.⁵: **F16L 19/02, F16L 23/00**

(45) Date de publication du fascicule du brevet:
24.10.90

(21) Numéro de dépôt: **87402485.4**

(22) Date de dépôt: **04.11.87**

(54) **Perfectionnement aux dispositifs de raccordement hermétique à joint déformable à double courbure et utilisation d'un tel dispositif.**

(30) Priorité: **06.11.86 FR 8615485**

(43) Date de publication de la demande:
**11.05.88 Bulletin 88/19**

(45) Mention de la délivrance du brevet:
**24.10.90 Bulletin 90/43**

(84) Etats contractants désignés:
**AT BE CH DE ES FR GB GR IT LI LU NL SE**

(56) Documents cités:
**DE-A- 1 937 399**
**FR-A- 1 540 946**
**FR-A- 2 036 502**
**GB-A- 908 044**
**US-A- 3 630 553**

(73) Titulaire: **SOCIETE PRECISION GENERALE, 111 Rue de Rosny, F-93100 Montreuil(FR)**

(72) Inventeur: **Pegon, Daniel, 22, rue Jean Moulin, F-93100 Montreuil(FR)**

(74) Mandataire: **Derambure, Christian, BUGNION ASSOCIES 55, rue Boissonade, F-75014 Paris(FR)**

## Description

L'invention concerne un dispositif de raccordement hermétique à joint déformable à double courbure et l'utilisation d' un tel dispositif.

On connaît déjà du document FR-A 1 540 946 (MARTIN) un joint métallique à double courbure qui permet de réaliser des raccords, brides ou jonctions métalliques, entre deux portées. De tels raccords sont peu encombrants et assurent en général une excellente étanchéité aux fluides de toutes natures, notamment aux gaz sous des conditions extrêmes d'utilisation (très fortes ou très faibles pressions ou températures, vibrations, flexions...).

Jusqu'à présent, on utilisait ces raccords connus avec des forces de serrage des portées l'une vers l'autre très importantes, de façon à obtenir un fluage du joint dans le domaine plastique qui était supposé assurer l'étanchéité aux fluides de toutes natures, notamment aux gaz du raccord.

Ces raccords connus présentent toutefois certains inconvénients. En particulier, on a constaté que ces raccords connus supportent mal les chocs thermiques brusques et plus précisément les dilatations différentielles, ainsi que les déformations en flexion, compression ou traction, phénomènes relativement fréquents dans les conditions d'utilisation de ces joints. On a remarqué également que ces raccords connus ne peuvent quasiment pas se déformer de façon élastique et se détériorent très rapidement lorsqu'ils sont soumis à des vibrations.

Le document GB-A 908 044 (LOCKEED AIRCRAFT CORP) décrit un dispositif d'étanchéité dont le joint a une section droite transversale en forme de croix. Bien que ce document prévoit la possibilité de ne serrer le joint que dans le domaine élastique, cet enseignement valable pour un joint en croix n'est pas transposable par l'homme du métier à un joint à double courbure qui travaille différemment. De plus, les extrémités des branches de la croix , étant pointues, ont tendance à pénétrer dans les portées, notamment dans le cas d'applications du dispositif dans des conditions thermiques ou mécaniques sévères.

Le document DE-A 1 937 399 (GAMAH CORP.) décrit un dispositif d'étanchéité comportant un joint de section rectangulaire non réalisé en pratique et de faible qualité.

Le document FR-A 2 036 502 (LE JOINT FRANCAIS) décrit un joint d'étanchéité à double courbure mais qui est utilisé dans des conditions très différentes de celui de FR-A 1 540 946, notamment sans prévoir à l'état serré un contact du joint avec des portées inclinées. Un tel joint n'est pas applicable dans des conditions extrêmes d'utilisation du fait de ses faibles performances.

De plus, le besoin s'est fait sentir de réaliser des dispositifs de raccordement encore plus performants que ceux de l'état de la technique en ce qui concerne leur herméticité, leurs conditions d'utilisation, et leur prix de revient. On a ainsi désiré réaliser des raccords étanches aux fluides de toutes natures, notamment aux gaz sous des pressions de l'ordre de $10^{-10}$ Torr ($1,3332.10^{-8}$ Pa) ou supérieures, ou au contraire de l'ordre de 3000 bars ($3.10^8$ Pa) ou supérieures, et/ou soumis à des températures de l'ordre de -250°C ou inférieures, ou de l'ordre de 1200°C ou supérieures et/ou soumis à des vibrations intenses.

L'invention vise à remédier aux inconvénients cités en augmentant les performances des raccords connus et a pour objet un dispositif de raccordement hermétique à très hautes performances du type de celui de FR-A 1 540 946 susceptible de résister aux chocs thermiques, notamment aux dilatations différentielles, aux déformations en flexion et/ou compression et/ou traction, aux vibrations intenses et qui présente une meilleure élasticité que les raccords connus. Un autre objet de l'invention est de diminuer simultanément le prix de revient d'un tel raccord.

Un autre objet de l'invention est de proposer une utilisation nouvelle d'un tel dispositif de raccordement qui en augmente considérablement les performances, dans les conditions mentionnées ci-dessus.

Pour ce faire, l'invention, selon les termes de la revendication 1, propose un dispositif de raccordement hermétique comportant d'une part, un joint déformable, à double courbure, et d'autre part, deux portées, le joint étant intercalé entre les deux portées sollicitées l'une vers l'autre selon un axe de serrage et qui définissent sur une partie seulement de leur épaisseur deux surfaces parallèles inclinées par rapport à l'axe, dans lequel à l'état normalement serré, les caractéristiques géométriques des portées et du joint sont telles que le contact du joint avec les deux portées se fait d'une part avec chaque surface inclinée respectivement par une et une seule ligne de contact et d'autre part par chaque chant extrême du joint qui vient en appui respectivement contre un autre surface de la portée mâle respectivement femelle.

La mise en contact des chants extrêmes du joint avec les surfaces des portées a lieu simultanément à la mise en contact du joint avec les surfaces inclinées lors du rapprochement des deux portées l'une vers l'autre. Les chants extrêmes du joint sont sensiblement plans et parallèles entre eux et les surfaces de portée avec lesquelles ils coopèrent sont sensiblement planes perpendiculaires à l'axe de serrage. A l'état normalement serré, les contraintes dans le joint sont inférieures à la limite d'élasticité du matériau constitutif du joint, qui conserve sa forme générale à double courbure. Le dispositif comporte avantageusement des moyens de contrôle de la force de serrage des deux portées l'une vers l'autre.

L'invention concerne également l'utilisation d' un dispositif selon l'invention, du type dans laquelle on intercale un joint entre les deux portées puis on sollicite les deux portées l'une vers l'autre par serrage, la force de serrage des deux portées l'une vers l'autre avec le joint intercalé étant contrôlée de façon que les contraintes qu'elle induit dans le joint restent inférieures à la limite d'élasticité du matériau constitutif du joint qui conserve sa forme générale à double courbure à l'état normalement serré, les contacts du joint avec les portées n'étant pas modifiés lors du serrage.

Il a été constaté avec surprise et contrairement à ce qui résulte de l'art antérieur que le fait de contrôler l'effort de serrage, notamment limiter cet effort pour serrer moins fortement le joint que ce qui est prévu dans FR-A 1 540 946, a pour effet d'augmenter notablement les performances d'étanchéité du dispositif. Il s'avère de plus que le dispositif selon l'invention est non seulement plus performant, mais procure des avantages intéressants, à savoir qu'il supporte beaucoup mieux les chocs thermiques et dilatations différentielles, les déformations en flexion et/ou compression et/ou traction, les vibrations intenses et qu'il possède une bonne élasticité. De plus la géométrie du joint et des portées est plus simple que celle des raccords de l'art antérieur, ce qui diminue notablement les coûts de fabrication du dispositif selon l'invention.

L'invention sera mieux comprise à la lecture de la description suivante d'une de ses modes de réalisation préférentiel se référant aux figures annexées dans lesquelles ;

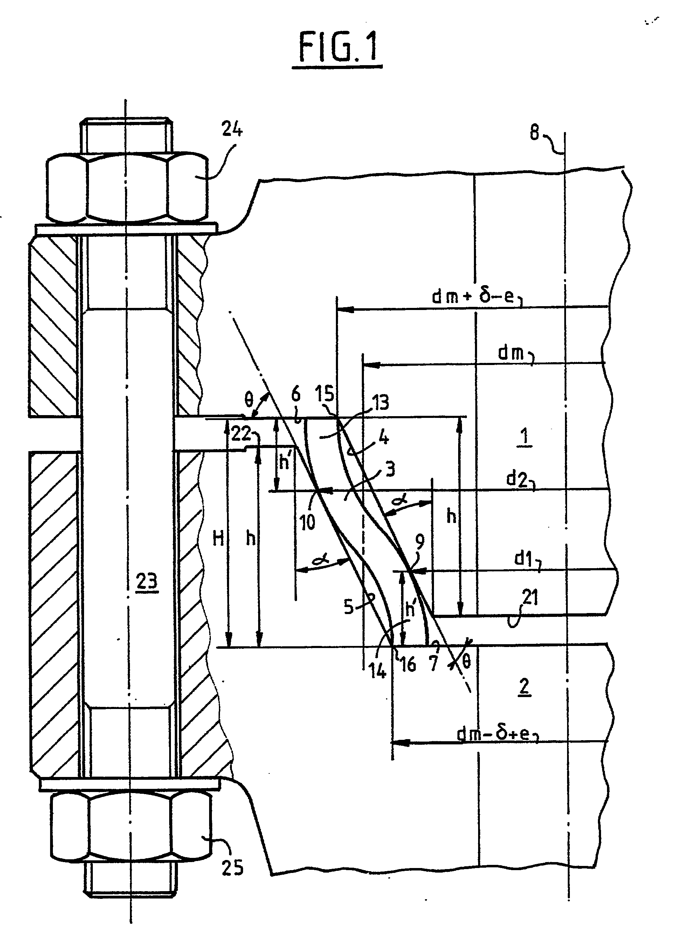

- La figure 1 est une demi-coupe schématique par un plan contenant l'axe de serrage d'un dispositif selon l'invention représenté à l'état normalement serré.

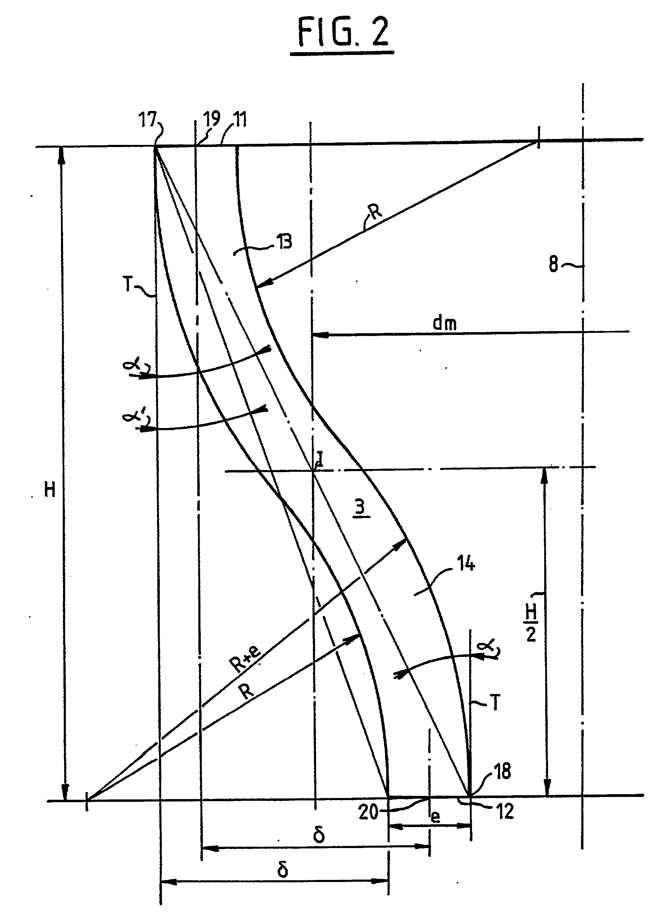

- La figure 2 est une demi-coupe schématique transversale par un plan contenant l'axe de serrage d'un joint d'un dispositif selon l'invention représenté à l'état normalement serré.
- La figure 3 est une coupe schématique partielle transversale illustrant les efforts qui s'exercent sur le joint lors du serrage d'un dispositif selon l'invention représenté à l'état normalement serré.

L'invention concerne un dispositif de raccordement hermétique de deux portées 1, 2 par l'intermédiaire d'un joint 3 déformable à double courbure. Un dispositif selon l'invention comporte le joint 3 et les deux portées 1,2. Les deux portées 1, 2 sont formées de surfaces libres 4, 5, 6, 7 de deux pièces entre lesquelles on veut réaliser un raccordement hermétique, c'est-à-dire au moins étanche aux fluides de toutes natures, notamment aux gaz. Les termes "double courbure" sont employés ici dans le sens général bien connu de l'homme du métier pour des joints d'étanchéité, et tel que décrit dans FR-A 1 540 946. Un joint 3 à double courbure a une section droite qui comporte un point d'inflexion I et deux branches 13, 14 symétriques par rapport à ce point d'inflexion I.

Le joint 3 est intercalé entre les deux portées 1, 2 qui sont sollicitées l'une vers l'autre par serrage dans une direction 8 de serrage matérialisée par l'axe 8 de serrage sur les figures. Chaque portée 1, 2 définit sur une partie seulement de son épaisseur (perpendiculairement à l'axe 8 de serrage), une surface inclinée 4, 5 par rapport à la direction 8 de serrage, les deux surfaces inclinées 4, 5 étant parallèles entre elles. Les deux portées 1,2 sont imbriquées l'une dans l'autre.

On peut ainsi généralement définir une portée mâle 1 et une portée femelle 2 de façon classique, la portée mâle 1 faisant saillie axialement, tandis que la portée femelle 2 forme axialement (c'est-à-dire dans la direction 8 de serrage) un évidement complémentaire. Ces termes "mâle" et "femelle" sont employés pour distinguer les deux portées 1, 2 l'une de l'autre, même si dans la pratique et pour certains modes de réalisation particuliers, les portées sont similaires (par exemple dans le cas de pièces rectilignes).

Les relations entre les caractéristiques essentielles des portées 1, 2 et du joint 3 d'un dispositif selon l'invention, à savoir l'inclination des surfaces 4, 5 et les courbures et l'épaisseur du joint 3 sont connues de FR-A 1 540 946 et ne seront pas décrites plus en détail.

L'ensemble des caractéristiques géométriques des portées 1, 2 et du joint 3 est tel que le contact du joint 3 avec les deux portées 1, 2 se fait d'une part avec chaque surface inclinée 4, 5 respectivement par une et une seule ligne de contact 9, 10, et d'autre part par chaque chant extrême 11, 12 du joint 3 qui vient en appui respectivement contre une autre surface 6, 7 de la portée mâle 1 respectivement femelle 2. De plus, selon l'invention , ces caractéristiques géometriques sont telles que la mise en contact des chants extrêmes 11, 12 du joint 3 avec les surfaces 6, 7 des portées 1, 2 à lieu simultanément à la mise en contact du joint 3 avec les surfaces inclinées 4, 5, lors du rapprochement des deux portées 1, 2 l'une vers l'autre.

Dans une utilisation selon l'invention d'un tel dispositif de raccordement hermétique, la force de serrage des deux portées 1, 2 l'une vers l'autre avec le joint 3 intercalé est contrôlée, notamment limitée, de façon que les contraintes qu'elle induit dans le joint 3 restent inférieures à la limite d'élasticité du matériau constitutif du joint 3 qui conserve sa forme général à double courbure.

Un dispositif de raccordement selon l'invention comporte des moyens de contrôle de la force de serrage des deux portées 1, 2 l'une vers l'autre avec le joint 3 intercalé.

Chaque surface 6, 7 coopérant avec un chant extrême 11, 12 du joint 3 un angle θ aigu avec la surface inclinée 5, 4 coopérant avec la branche 13, 14 du joint 3 comportant ce chant 11, 12.

De préférence, les chants extrêmes 11, 12 du joint 3 sont au moins sensiblement plans parallèles entre eux et les surfaces 6, 7 de portée avec lesquelles ils coopèrent sont au moins sensiblement planes perpendiculaires à l'axe 8 de serrage. De la sorte, les chants 11, 12 du join t sont également sensiblement perpendiculaires à l'axe 8 de serrage lorsque le dispositif est à l'état normalement serré. De plus, les chants extrêmes 11, 12 du joint 3 sont au moins sensiblement perpendiculaires à la direction tangente T au joint 3 au voisinage de ces chants 11, 12.

La surface 6 de la portée mâle 1 coopérant avec un chant extrême 11 du joint 3 définit une arête vive concave 15 d'intersection avec la surface inclinée mâle 4, la surface 7 de la portée femelle 2 coopérant avec l'autre chant extrême 12 du joint 3 définissant une arête vive concave 16 d'intersection avec la sur-

3

face inclinée femelle 5.

Un dispositif de raccordement selon l'invention est souvent utilisé pour des pièces cylindriques creuses, telles que des tuyaux, et le plus souvent à section droite sensiblement circulaire. Il est clair cependant que l'on peut adapter un tel dispositif à d'autres formes de pièces (rectilignes, polyèdriques, ...). Les formes données aux portées 1, 2 et au joint 3 seront adaptées en conséquence. Dans le cas de tuyaux (voir FR-A 1 540 946), décrit plus précisément par la suite, les portées 1, 2 et le joint 3 présentent une symétrie, notamment de révolution, par rapport à l'axe 8 de serrage. Les surfaces inclinées 4, 5 sont tronconiques, les surfaces 6, 7 coopérant avec les chants extrêmes 11, 12 sont au moins sensiblement annulaires radiales, les lignes de contact 9, 10 du joint 3 avec les surfaces tronconiques 4, 5 sont fermées, notamment au moins sensiblement circulaires.

La surface inclinée 4 de la portée mâle 1 est inclinée de sorte que la saillie a son épaisseur qui diminue dans le sens de la portée mâle 1 vers la portée femelle 2, la surface inclinée 5 de la portée femelle 2 étant inclinée de sorte que l'évidement complémentaire va en s'évasant dans le sens de la portée femelle 2 vers la portée mâle 1, et le contact du joint 3 avec une portée 1, 2 se fait d'une part par un chant extrême 11, 12 d'une branche 13, 14 et d'autre part par l'autre branche 14, 13 le long d'une et seule ligne de contact 9, 10 contre la surface inclinée 4, 5 de ladite portée 1, 2.

On va maintenant décrire le mode de réalisation représenté en supposant de façon non limitative que le dispositif est cylindrique de révolution autour de l'axe 8.

Comme déjà dit, le joint 3 a une section droite en forme de "S", et comporte deux branches 13, 14 de rayons de courbure égaux R. Les deux chants extrêmes 11, 12 sont distants d'une hauteur H qui est la hauteur du joint 3, caractéristique du dispositif de raccordement. Les deux branches 13, 14 se rejoignent tangentiellement pour former inflexion en I à mi-hauteur. Le joint 3 est symétrique par rapport au cercle passant par I, centré sur l'axe 8 et de diamètre dm. Les deux cercles 17, 18 les plus extrêmes du joint 3 définissent l'angle α d'inclinaison du joint 3 qui est caractéristique du dispositif de raccordement. Le déport δ, distance entre les cercles médians 19, 20 des chants 11, 12, ainsi que l'épaisseur e du joint 3 sont également des caractéristiques du dispositif de raccordement. On peut voir cependant que le déport δ s'exprime par :

$\delta = H.tg\alpha - e$

Selon l'invention, le rapport

$$\frac{H}{e}$$

est de préférence compris entre 4 et 18, notamment de l'ordre de 8,8. Des essais réalisés ont fait apparaître un optimum pour 8,84.

L'angle α' joignant deux cercles 17, 22 ou 21, 18 des chants 11, 12 situés du même côté s'exprime par α' - arctg

$$\alpha' = arctg \frac{\delta}{H}$$

Le rayon de courbure R s'exprime donc par

$$R = \frac{H}{2 \sin 2\alpha'} - \frac{e}{2} \qquad R = \frac{H}{2 \sin 2 \, arctg \frac{\delta}{H}} - \frac{e}{2}$$

Le cercle de contact 9, 10 d'une branche 13, 14 avec une surface inclinée tronconique 4, 5 est située à

$$h' = \sin\alpha \frac{H}{2 \sin 2 \, arctg \frac{\delta}{H}} + \frac{e}{2}$$

du chant extrême 11,12 de cette branche 13,14.

Chaque portée 1, 2 est constituée de la surface tronconique 4, 5 de contact avec un cercle 9, 10 du joint 3, de la surface radiale sensiblement plane 6, 7 de contact avec un chant 11, 12 du joint 3, et d'une surface libre 21, 22 parallèle à la surface radiale de contact 6, 7, sensiblement plane, située à une distance h de la surface radiale de contact 6, 7, qui est la hauteur caractéristique de la portée 1, 2. Les deux surfaces radiales de contact 6, 7 et libre 21, 11 d'une portée 1, 2 délimitent la surface tronconique 4, 5.

Les deux portées 1, 2 ont même hauteur h. Cette hauteur h est inférieure à la hauteur H du joint 3 afin d'éviter un contact entre les surfaces radiales en regard 6, 22 et 7, 21 de deux portées 1, 2 distinctes. Le rapport est compris avantageusement entre 1,2 et 1,4 , notamment de l'ordre de 1,271.

De la sorte, le grand diamètre de la surface tronconique mâle 4 à pour valeur dm + δ - e, et le petit diamètre de la surface tronconique femelle a pour valeur dm - δ + e .

Le petit diamètre de la surface tronconique mâle est inférieur au diamètre $d_1$ du cercle de contact 9 avec cette surface 4, et le grand diamètre de la surface tronconique femelle 5 est supérieur au diamètre $d_2$ du cercle de contact 10 avec cette surface 5.

$$\text{On a :} \quad d_1 = dm - 2 \left[ \frac{\delta - e}{2} + R \cos \alpha + e \cos \alpha - R \right]$$

$$\text{et :} \quad d_2 = dm + 2 \left[ \frac{\delta - e}{2} + R \cos \alpha + e \cos \alpha - R \right]$$

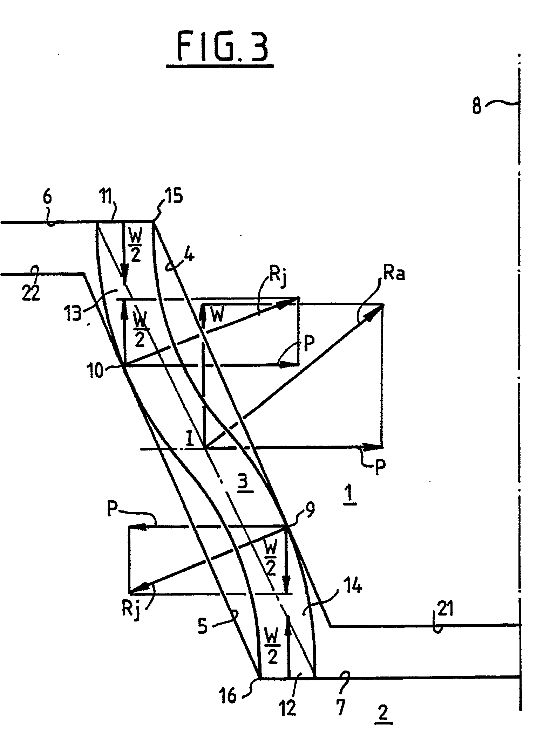

L'effort W axial (figure 3) à appliquer sur le joint 3 pour obtenir son serrage induit une réaction Rj sur les cercles de contact 9, 10. La résultante Ra de ces forces est :

$$Ra = W \sqrt{1 + \frac{1}{4 \, tg^2 \, \alpha}}$$

Les contraintes théoriques imposées au joint 3 sont données par les formules suivantes, qui permettent de contrôler l'effort W de serrage pour éviter le fluage du joint 3 :

$$\bullet \quad \text{compression axiale :} \; \sigma_{ja} = \frac{W}{\pi . \, dm . \, H . \, tg\alpha}$$

$$\bullet \quad \text{cisaillement radial :} \; \sigma_{jr} = \frac{W}{2\pi . \, dm . \, H . \, tg^2 \, \alpha}$$

$$\bullet \quad \text{compression moyenne due à Ra :} \; \sigma_{jRa} = \frac{W \cos \alpha \sqrt{1 + \frac{1}{4tg^2 \alpha}}}{\pi \, dm \, H}$$

$$\bullet \quad \text{moment de flexion maximum :} \; M_{Fj} \simeq \frac{W . \, \delta}{4}$$

L'effort W de serrage du joint 3 pourra ainsi être calculé et vérifié en pratique par la connaissance des propriétés du matériau constitutif du joint 3. On pourra alors règler les moyens de contrôle du serrage en conséquence. Ces moyens de contrôle sont connus en soi et pourront être adaptés en fonction des besoins (cliquet, butée en fin de pas de vis ...). On peut aussi prévoir de serrer le dispositif par des outils spéciaux tels que clés dynamomètriques outils de contrôle par ultrason, outils de serrage hydraulique ou autres, et éviter d'adapter des moyens de contrôle intégrés au dispositif. Les moyens de sollicitation axiale représentés à titre d'exemple sont constitués d'une tige filetée 23 et de boulons 24, 25.

Les essais effectués montrent que l'étanchéité obtenue est quasi parfaite et meilleure que celle classiquement obtenue par l'art antérieur, et ce à un niveau de prix de revient équivalent ou inférieur.

ESSAI 1 :

Des joints conformes à l'invention ont été testés dans des conditions de pression sévères allant du vide secondaire ($10^{-6}$ torr, soit $133,32.10^{-6}$ Pa) jusqu'à 300 bars ($3.10^7$ Pa). La fuite est mesurée par détection sur un banc hélitest H.L.T. 100 de la marque BALZER, à 20°C. Les résultats obtenus sont rassemblés sur le tableau suivant en torr.l/s (soit 1,3332/atm.cm³/s, ou encore $1,3332.10^{-1}$ Pa.m³/s). Le taux de fuite minimum détectable est de $3.10^{-10}$ torr l/s.

| caractéristiques du joint | | PRESSION | | | | | |
|---|---|---|---|---|---|---|---|
| dm (mm) | e ($10^{-1}$ mm) | $10^{-6}$ torr | 10 bars | 50 bars | 100 bars | 200 bars | 300 bars |
| 10 | 5 | $3.10^{-10}$ | $3.10^{-9}$ | $3.10^{-9}$ | $5.10^{-9}$ | $5.10^{-9}$ | $5.10^{-9}$ |
| 34 | 5 | $3.10^{-10}$ | $3.10^{-9}$ | $2.10^{-9}$ | $4.10^{-9}$ | $5.10^{-9}$ | $5.10^{-9}$ |
| 72 | 8 | $4.10^{-10}$ | $2.10^{-9}$ | $2.10^{-9}$ | $4.10^{-9}$ | $3.10^{-9}$ | $4.10^{-9}$ |
| 102 | 10 | $5.10^{-10}$ | $3.10^{-9}$ | $2.10^{-9}$ | $3.10^{-9}$ | $3.10^{-9}$ | $5.10^{-9}$ |
| 132 | 12 | $5.10^{-10}$ | $5.10^{-9}$ | $4.10^{-9}$ | $2.10^{-9}$ | $5.10^{-9}$ | $6.10^{-9}$ |
| 172 | 15 | $8.10^{-10}$ | $6.10^{-9}$ | $3.10^{-9}$ | $4.10^{-9}$ | $4.10^{-9}$ | $4.10^{-9}$ |
| 211 | 12 | $8.10^{-10}$ | $5.10^{-9}$ | $5.10^{-9}$ | $4.10^{-9}$ | $5.10^{-9}$ | $4.10^{-9}$ |
| 300 | 15 | $9.10^{-10}$ | $4.10^{-9}$ | $4.10^{-9}$ | – | – | – |
| 480 | 15 | $10^{-9}$ | $5.10^{-9}$ | – | – | – | – |

ESSAI 2 :

Un essai comparatif a été mené par rapport aux joints conformes à FR-A 1 540 946 (MARTIN) à 20°C sous un vide secondaire de $10^{-6}$ torr ($133,32.10^{-6}$ Pa). Les résultats obtenus, donnés en torr.l/s ($1.3332.10^{-1}$ Pa.m³/s) sont rassemblés sur le tableau suivant.

Le même banc hélitest que dans l'essai 1 a été utilisé, le taux de fuite minimum détactable étant de $3.10^{-10}$ torr. l/s.

| CARACTERISTIQUES DU JOINT | | JOINT CONFORME AU BREVET FR 1540946 | INVENTION |
|---|---|---|---|
| $dm$ (mm) | $e$ ($x10^{-1} mm^3$) | | |
| 10 | 5 | $1 . 10^{-8}$ | $3 . 10^{-10}$ |
| 34 | 5 | $2 . 10^{-8}$ | $3 . 10^{-10}$ |
| 72 | 8 | $1 . 10^{-8}$ | $4 . 10^{-10}$ |
| 102 | 10 | $1 . 10^{-8}$ | $5 . 10^{-10}$ |
| 132 | 12 | $3 . 10^{-8}$ | $5 . 10^{-10}$ |
| 172 | 15 | $4 . 10^{-8}$ | $8 . 10^{-10}$ |
| 211 | 12 | $6 . 10^{-8}$ | $8 . 10^{-10}$ |
| 300 | 15 | $4 . 10^{-8}$ | $9 . 10^{-10}$ |
| 480 | 15 | $8 . 10^{-8}$ | $10^{-9}$ |

On constate donc une amélioration moyenne de $10^{-2}$ torr. l/s entre l'art antérieur et l'invention.

**Revendications**

1. Dispositif de raccordement hermétique du type comportant d'une part, un joint (3) déformable à double courbure comportant deux chants extrêmes (11, 12) et d'autre part, deux portées (1, 2), le joint (3) étant intercalé entre les deux portées (1, 2) sollicitées l'une vers l'autre selon une direction (8) de serrage, les portes (1, 2) définissant sur une partie seulement de leur épaisseur deux surfaces parallèles inclinées (4, 5) par rapport à la direction (8) de serrage caractérisé en ce que, à l'état normalement serré du joint (3), le contact du joint (3) avec les portées (1, 2) se fait part avec chaque surface inclinée (4, 5) respectivement par une et une seule ligne de contact (9, 10) s'étendant au moins sensiblement perpendiculairement à la direction (8) de serrage et d'autre part par chaque chant extrême (11, 12) du joint (3) qui vient en appui contre une autre surface (6, 7) d'une (1) des portées, respectivement de l'autre (2) portée, et en ce que les caractéristiques géométriques des portées (1, 2) et du joint (3) sont telles que la mise en contact des chants extrêmes (11, 12) du joint (3) avec les surfaces (6, 7) des portées (1, 2) a lieu simultanément à la mise en contact du joint (3) avec les surfaces inclinée (4, 5), lors du rapprochement des deux portées (1, 2) l'une vers l'autre.

2. Dispositif selon la revendication 1, caractérisé en ce qu'il comporte selon la revendication 1, caractérisé en ce qu'il comporte des moyens de contrôle de la force de serrage des deus portées (1, 2) l'une vers l'autre avec le joint (3) intercalé.

3. Dispositif selon l'une quelconque des revendications 1 et 2, caractérisé en ce que la surface (6, 7) de chaque portée (1, 2) coopérant avec un chant extrême (11, 12) du joint (3) définit une arrête vive concave (15, 16) d'intersection avec la surface inclinée (4, 5) de cette portée (1, 2).

4. Dispositif selon l'une quelconque des revendications 1 à 3 caractérisé en ce que les chants extrêmes (11, 12) du joint (3) sont au moins sensiblement plans parallèles entre eux, et en ce que les deux surfaces (6, 7) de portée avec lesquelles ils coopèrent sont au moins sensiblement planes et perpendiculaires à la direction (8) de serrage.

5. Dispositif selon l'une quelconque des revendications 1 à 4, caractérisé en ce que les chants extrêmes (11, 12) du joint (3) sont au moins sensiblement perpendiculaires à la direction tangente T du joint (3) au voisinage de ces chants (11, 12).

6. Dispositif selon l'une quelconque des revendications 1 à 5, caractérisé en ce que chaque surface (6, 7) d'une portée (1, 2) coopérant avec un chant extrême (11, 12) du joint (3) forme un angle ϴ aigu avec la surface inclinée (5, 4) coopérant avec une branche (13, 14) du joint (3) comportant ce chant (11, 12).

7. Dispositif selon l'une quelconque des revendications 1 à 6, caractérisé en ce que les portées (1, 2) et le joint (3) présentent une symétrie, notamment de révolution, par rapport à un axe (8) définissant la direction de serrage, les surfaces inclinées (4, 5) étant tronconiques, les surfaces (6, 7) coopérant avec les chants extrêmes (11, 12) étant au moins sensiblement annulaires radiales.

8. Dispositif selon l'une quelconque des revendications 1 à 7, caractérisé en ce que la surface inclinée (4) d'une portée dite mâle (1) est inclinée de façon à former une saillie qui a son épaisseur qui diminue dans le sens de cette portée mâle (1) vers l'autre portée dite femelle (2), la surface inclinée (5) de la portée femelle (2) étant inclinée de façon à former un évidement complémentaire qui va en s'évasant dans le sens de la portée femelle (2) vers la portée mâle (1), et en ce que le joint (3) est en contact avec une portée (1, 2) d'une part par un chant extrême (11, 12) d'une de ses branches (13, 14) et d'autre part l'autre branche (14, 13) le long d'une et d'une seule ligne de contact (9, 10) contre surface inclinée (4, 5) de ladite potée (1, 2).

9. Utilisation d'un dispositif de raccordement hermétique selon l'une quelconque des revendication 1 à 8 du type comportant d'une part, un joint (3) déformable à double courbure comportant deux chants extrême (11, 12) et d'autre part, deux portées (1, 2), le joint (3) étant intercalé entre les deux portées (1, 2) sollicitées l'une vers l'autre selon une direction (8) de serrage, les portées (1, 2) définissant sur une partie seulement de leur épaisseur deux surfaces parallèles inclinées (4, 5) par rapport à la direction (8) de serrage de sorte que le contact du joint (3) avec les portées (1, 2) se fait d'une part avec chaque surface inclinée (4, 5) respectivement par une et une seule ligne de contact (9, 10) s'étendant au moins sensiblement perpendiculairement à la direction (8) de serrage et d'autre part par chaque chant extrême (11, 12) du joint (3) qui vient en appui contre une autre surface (6, 7) d'une (1) des portées, respectivement de l'autre (2) portée, utilisation dans laquelle on intercale le joint (3) entre les deux portées (1, 2) puis on sollicite les deux portées (1, 2) l'une vers l'autre par serrage, et on contrôle la force de serrage des deux portées (1, 2) l'une vers l'autre avec le joint (3) intercal de façon que les contraintes qu'elle induit dans le joint (3) restent inférieures à la limite d'élasticité du matériau constitutif du joint (3) qui conserve sa forme générale à double courbure à l'état normalement serré, les contacts du joint (3) avec les portées (1, 2) n'étant pas modifiées lors du serrage.

## Patentansprüche

1. Vorrichtung zur hermetischen Verbindung, welche einerseits eine verformbare Dichtung (3) mit Doppelkrümmung und zwei endseitigen Schmalseiten (11, 12) und andererseits zwei Bereiche (1, 2) aufweist, wobei die Dichtung (3) zwischen die beiden Bereiche (1, 2) welche in einer Schliessrichtung (8) gegeneinander beansprucht werden, eingesetzt ist und die Bereiche (1, 2) auf nur einem Teil ihrer Dicke zwei parallele und zur Schliessrichtung (8) abgeschrägte Flächen (4, 5) bestimmen, dadurch gekennzeichnet, dass im eingeschlossenen Normalzustand der Dichtung (3) der Kontakt dieser Dichtung (3) mit den Bereichen (1, 2) einerseits mit jeder abgeschrägten Fläche (4, 5) jeweils durch eine einzige Kontaktlinie (9, 10), die im wesentlichen senkrecht zur Schliessrichtung (8) verläuft, und andererseits durch jede endseitige Schmalseite (11, 12) der Dichtung (3), welche sich gegen eine andere Fläche (6, 7) eines (1) bzw. (2) der Bereiche stützt, erfolgt, und dass die geometrischen Kenndaten der Bereiche (1, 2) und der Dichtung (3) so bestimmt sind, dass ein Kontaktieren der endseitigen Schmalseiten (11, 12) der Dichtung (3) mit den Flächen (6, 7) der Bereiche (1, 2) gleichzeitig mit dem Kontaktieren der Dichtung (3) mit den abgeschrägten Flächen (4, 5) erfolgt, wenn sich die beiden Bereiche (1, 2) einander nähern.

2. Vorrichtung nach Anspruch 1, gekennzeichnet durch Einrichtungen zum Steuern der Schliesskraft der beiden Bereiche (1, 2) gegeneinander mit der eingesetzten Dichtung (3).

3. Vorrichtung nach Anspruch 1 oder 2, dadurch gekennzeichnet, dass die Fläche (6, 7) jedes Bereichs (1, 2), die mit einer endseitigen Schmalseite (11, 12) der Dichtung (3) zusammenwirkt, eine deutlich konkave Schmittkante (15, 16) mit der abgeschrägten Fläche (4, 5) dieses Bereichs (1, 2) bestimmt.

4. Vorrichtung nach einem der Ansprüche 1 bis 3, dadurch gekennzeichnet, dass die endseitigen Schmalseiten (11, 12) der Dichtung (3) zueinander im wesentlichen parallele Flächen sind und dass die beiden mit diesen zusammenwirkenden Flächen (6, 7) der Bereiche zumindest im wesentlichen flach und senkrecht zur Schliessrichtung (8) sind.

5. Vorrichtung nach einem der Ansprüche 1 bis 4, dadurch gekennzeichnet, dass die endseitigen Schmalseiten (11, 12) der Dichtung (3) zumindest im wesentlichen senkrecht zur Tangentialrichtung T der Dichtung (3) im Bereich ihrer Schmalseiten (11, 12) verlaufen.

6. Vorrichtung nach einem der Ansprüche 1 bis 5, dadurch gekennzeichnet, dass jede Fläche (6, 7) eines Bereichs (1, 2), der mit einer endseitigen Schmalseite (11, 12) der Dichtung (3) zusammenwirkt, einen spitzen Winkel Θ mit der abgeschrägten Fläche (4, 5), die mit einem Zweig (13, 14) der diese Schmalseite (11, 12) aufweisenden Dichtung (3) zusammenwirkt, einnimmt.

7. Vorrichtung nach einem der Ansprüche 1 bis 6, dadurch gekennzeichnet, dass die Bereiche (1, 2) und die Dichtung (3) symmetrisch, insbesondere rotationssymmetrisch in bezug auf eine die Schliessrichtung bestimmende Achse (8) sind, wobei die abgeschrägten Flächen (4, 5) kegelstumpfflächenartig sind und die mit den endseitigen Schmalseiten (11, 12) zusammenwirkenden Flächen (6, 7) zumindest im wesentlichen radial ringförmig sind.

8. Vorrichtung nach einem der Ansprüche 1 bis 7, dadurch gekennzeichnet, dass die abgeschrägte Fläche (4) eines als männlich bezeichneten Bereichs (1) zur Bildung eines Vorsprungs, dessen Dicke in die Richtung dieses männlichen Bereichs (1) zum anderen, weiblichen Bereich (2) hin abnimmt, schräggestellt ist, wobei die abgeschrägte Fläche (5) des weiblichen Bereichs (2) so schräggestellt ist, dass sie eine komplementäre Ausnehmung bildet, die sich in die Rchtung des weiblichen Bereichs (2) zum männlichen Bereich (1) hin ausweitet, und dass die Dichtung (3) mit einem Bereich (1, 2) einerseits über eine endseitige Schmalseite (11, 12) einer ihrer Zweige (13, 14) und andererseits über den anderen Zweig (14, 13) entlang einer einzigen Berührungslinie (9, 10) zu einer abgeschrägten Fläche (4, 5) des Bereichs (1, 2) in Berührung steht.

9. Verwendung einer Vorrichtung zur hermetischen Verbindung nach einem der Ansprüche 1 bis 8, welche einerseits eine verformbare Dichtung (3) mit Doppelkrümmung und zwei endseitigen Schmalseiten (11, 12) und andererseits zwei Bereiche (1, 2) aufweist, wobei die Dichtung (3) zwischen die beiden Bereiche (1, 2) welche in einer Schliessrichtung (8) gegeneinander beansprucht werden, eingesetzt ist und die Bereiche (1, 2) auf nur einem Teil ihrer Dicke zwei parallele und zur Schliessrichtung (8) abgeschrägte Flächen (4, 5) bestimmen, sodass der Kontakt dieser Dichtung (3) mit den Bereichen (1, 2) einerseits mit jeder abgeschrängten Fläche (4, 5) jeweils durch eine einzige Kontaklinie (9, 10), die im wesentlichen senkrecht zur Schliessrichtung (8) verläuft, und andererseits durch jede endseitige Schmalseite (11, 12) der Dichtung (3), welche sich gegen eine andere Fläche (6, 7) eines (1) bzw. (2) der Bereiche stützt, erfolgt, wobei bei der Verwendung die Dichtung (3) zwischen die beiden Bereiche (1, 2) eingesetzt wird, dann die beiden Bereiche (1, 2) durch Verschliessen aneinandergepresst werden und die Schliesskraft der beiden Bereiche gegeneinander mit der dazwischenliegenden Dichtung (3) so gesteuert wird, dass die auf die Dichtung (3) ausgeübten Beanspruchungen unter der Elastizitätsgrenze des diese Dichtung (3) bildenden Materials, welches seine Form mit Doppelkrümmung im verriegelten Normalzustand aufrechterhält, liegen, wobei die Kontakte der Dichtung (3) mit den Bereichen (1, 2) im Schliesszustand nicht verändert werden.

## Claims

1. A hermetic connecting device of the type comprising firstly a deformable seal (3) with a double curve comprising two end faces (11, 12), and secondly two bearing parts (1, 2), the seal (3) being inserted between the two bearing parts (1, 2) drawn towards one another in a tightening direction (8), the bearing parts (1, 2) defining over just a portion of their thickness two parallel surfaces (4, 5) inclined in relation to the tightening direction (8), characterised in that in the normally tightened state of the seal (3) the contact of the seal (3) with the bearing parts (1, 2) is made firstly with each inclined surface (4, 5) respectively through one single contact line (9, 10) extending at least substantially perpendicular to the tightening direction (8) and secondly through each end face (11, 12) of the seal (3) which comes to bear against another surface (6, 7) of one of the bearing parts (1), respectively of the other bearing part (2), and in that the geometric characteristics of the bearing parts (1, 2) and of the seal (3) are such that the end faces (11, 12) of the seal (3) are brought into contact with the surfaces (6, 7) of the bearing parts (1, 2) at the same time as the seal (3) is brought into contact with the inclined surfaces (4, 5) when the two bearing parts (1, 2) are moved towards one another.

2. A device according to claim 1, characterised in that it comprises means for controlling the tightening force of the two bearing parts (1, 2) towards one another with the seal (3) inserted.

3. A device according to any one of claims 1 and 2, characterised in that the surface (6, 7) of each bearing part (1, 2) co-operating with an end face (11, 12) of the seal (3) defines a concave sharp edge (15, 16) intersecting with the inclined surface (4, 5) of that bearing part (1, 2).

4. A device as in any one of claims 1 to 3, characterised in that the end faces (11, 12) of the seal (3) are at least substantially plane parallel with one another and in that the two bearing part surfaces (6, 7) with which they co-operate are at least substantially plane and perpendicular to the clamping direction (8).

5. A device as in any one of claims 1 to 4, characterised in that the end faces (11, 12) of the seal (3) are at least substantially perpendicular to the tangent T of the seal (3) in the vicinity of these faces (11, 12).

6. A device as in any one of claims 1 to 5, characterised in that each surface (6, 7) of a bearing part (1, 2) co-operating with an end face (11, 12) of the seal (3) forms an acute angle Θ with the inclined surface (5, 4) co-operating with a limb (13, 14) of the seal (3) comprising this face (11, 12).

7. A device as in any one of claims 1 to 6, characterised in that the bearing parts (1, 2) and the seal (3) exhibit a symmetry, notably of revolution, in relation to an axis (8) defining the tightening direction, the inclined surfaces (4, 5) being the shape of a truncated cone, the surfaces (6, 7) co-operating with the end faces (11, 12) being at least substantially annular and radial.

8. A device as in any one of claims 1 to 7, characterised in that the inclined surface (4) of a so-called male bearing part (1) is inclined so as to form a projection which has a thickness which reduces in the direction from this male bearing part (1) to the other so-called female bearing part (2), the inclined surface (5) of the female bearing part (2) being inclined so as to form a complementary hollow which opens out in the direction from the female bearing part (2) to the male bearing part (1), and in that the seal (3) is in contact with one bearing part (1, 2) firstly through one end face (11, 12) of one of its limbs (13, 14) and secondly through the other limb (14, 13) along one single contact line (9, 10) against one inclined surface (4, 5) of said bearing part (1, 2).

9. Use of a hermetic connecting device according to any one of claims 1 to 8 of the type comprising firstly a deformable seal (3) with a double curve comprising two end faces (11, 12), and secondly two bearing parts (1, 2), the seal (3) being inserted between the two bearing parts (1, 2) drawn towards one another in a tightening direction (8), the bearing parts (1, 2) defining over just a portion of their thickness two parallel surfaces (4, 5) inclined in relation to the tightening direction (8) so that the contact of the seal (3) with the bearing parts (1, 2) is made firstly with each inclined surface (4, 5) respectively through one single contact line (9, 10) extending at least substantially perpendicular to the tightening direction (8) and secondly through each end face (11, 12) of the seal (3) which comes to bear against another surface (6, 7) of one of the bearing parts (1), respectively of the other bearing part (2), use in which the seal (3) is inserted between the two bearing parts (1, 2), then the two bearing parts (1, 2) are drawn together by tightening and the tightening force of the two bearing parts (1, 2) towards one another with the seal (3) inserted is controlled so that the stresses that it induces in the seal (3) remain less than the elastic limit of the material forming the seal (3) which retains its general shape with a double curve in the normally tightened state, the contacts of the seal (3) with the bearing parts (1, 2) not being modified during the tightening.

# FIG.1

## FIG. 2

# FIG. 3